(19) Europäisches Patentamt
European Patent Office
Office européen des brevets

(11) EP 0 433 887 B1

(12) EUROPÄISCHE PATENTSCHRIFT

(45) Veröffentlichungstag und Bekanntmachung des Hinweises auf die Patenterteilung:
**12.06.1996 Patentblatt 1996/24**

(51) Int Cl.[6]: **C08G 65/32**

(21) Anmeldenummer: **90124066.3**

(22) Anmeldetag: **13.12.1990**

(54) **Polytetrahydrofuranderivate mit endständigen aromatischen Gruppen**

Aromatic groups terminated polytetrahydrofuran derivatives

Dérivés de polytétrahydrofurane à groupement aromatique terminal

(84) Benannte Vertragsstaaten:
**BE DE ES FR GB IT NL**

(30) Priorität: **22.12.1989 DE 3942574**

(43) Veröffentlichungstag der Anmeldung:
**26.06.1991 Patentblatt 1991/26**

(73) Patentinhaber: **BASF Aktiengesellschaft**
**D-67063 Ludwigshafen (DE)**

(72) Erfinder:
- **Hickmann, Eckhard, Dr.**
**D-6701 Dannstadt-Schauernheim (DE)**
- **Koehler, Ulrich, Dr.**
**D-6900 Heidelberg (DE)**
- **Siegel, Hardo, Dr.**
**D-6720 Speyer (DE)**

(56) Entgegenhaltungen:
**EP-A- 0 268 849** **EP-A- 0 288 825**
**GB-A- 2 118 184** **US-A- 4 515 981**

- **ACS SYMPOSIUM SERIES 59, Library of Congress, US; (1977) S.Smith et al.; Ring opening Polimerization: New Aspects of the Chemistry of Living Tetrahydrofuran Polymers (Seiten 13-23)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 433 887 B1

**Beschreibung**

Diese Erfindung betrifft neue Polytetrahydrofuranderivate mit endständigen aromatischen Gruppen.

Die neuen Polytetrahydrofuranderivate haben die allgemeine Formel I

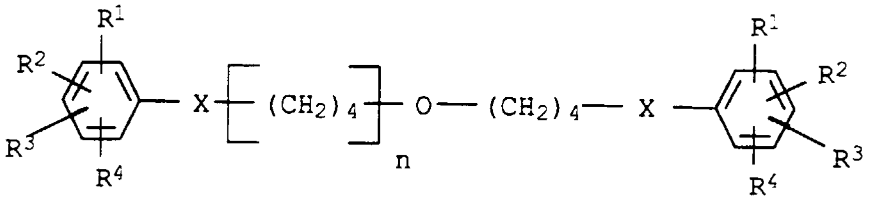

I

in der

n eine Zahl von 2 bis 70, X das Brückenglied -O-,

$R^1$ einen OHC-NH-, HO-, OHC-, NC-, $HOCH_2$-, $ClH_2C$-, $FH_2C$-, $Cl_3C$-, $F_3C$-, $HO_3S$-, ClOC-, OCN-, NCO-Rest oder einen der Reste $R^5$O-CO-, $R^5$CO-, $R^5$O-, $R^5$CO-NH-, $R^5$OOC-NH-, $R^5$OOC-O-, in denen $R^5$ für Alkylreste mit 1 bis 10 C-Atomen steht,

$R^2$ und $R^3$ jeweils ein Wasserstoffatom oder einen Alkylrest mit 1 bis 10 C-Atomen und

$R^4$ ein Wasserstoffatom, einen Alkylrest mit 1 bis 4 C-Atomen oder einen HO-Rest bedeuten, oder die allgemeine Formel II

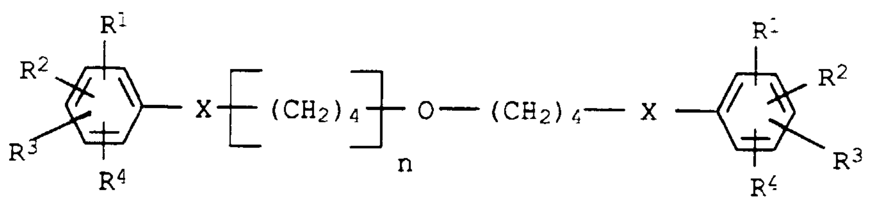

II

in der

n eine Zahl von 2 bis 70, X das Brückenglied -NH-,

$R^1$ ein Wasserstoffatom, einen Alkylrest mit 1 bis 20 C-Atomen, einen $H_2N$-, $O_2N$-, OHC-NH-, HO-, OHC-, NC-, $HOCH_2$-, $H_2NCH_2$-, $ClH_2C$-, $FH_2C$-, $Cl_3C$-, $F_3C$-, $HO_3S$-, ClOC-, OCN-, NCO-Rest oder einen der Reste $R^5$NH-, $R^5R^6$N-, $R^5$O-CO-, $R^5$CO-, $R^5$O-, $R^5$CO-NH-, $R^5$OOC-NH-, $R^5$OOC-O-, in denen $R^5$ und $R^6$ für Alkylreste mit 1 bis 10 C-Atomen stehen,

$R^2$ und $R^3$ jeweils ein Wasserstoffatom, einen Alkylrest mit 1 bis 10 C-Atomen, einen $H_2N$-, $O_2N$-, OHC-NH-, HO-, OHC-, NC-, $HOCH_2$-Rest oder einen der Reste $R^5$-NH-, $R^5R^6$-N-, in denen $R^5$ und $R^6$ die obengenannte Beschreibung haben, und

$R^4$ ein Wasserstoffatom, einen Alkylrest mit 1 bis 4 C-Atomen oder einen $H_2N$-, $O_2N$- oder HO-Rest bedeuten.

Polytetrahydrofurane (im folgenden PTHF genannt) haben die allgemeine Formel

$$H{-}[O{-}(CH_2)_4]_m{-}OH$$

in der m = n + 1 bedeutet. Sie werden z.B. durch kationische Polymerisation von Tetrahydrofuran (im folgenden THF genannt) hergestellt. In der Formel gibt der Polymerisationsgrad m die Anzahl der vom THF abgeleiteten Oxi-butan-1,4-diyl-Einheiten pro Molekül an; er liegt üblicherweise bei m = 3 (entsprechend einem mittleren Molgewicht von MG = 234) bis m etwa 70 (entsprechend einem mittleren MG von etwa 5000). Der Polymerisationsgrad m bzw. das diesem Wert entsprechende mittlere Molgewicht (im folgenden als $\overline{MG}$ bezeichnet), durch die die bei der Polymerisation von THF erhältlichen PTHF-Gemische charakterisiert werden, können z.B. durch osmometrische oder titrimetrische Analysen ermittelt werden. Von besonderem technischen Interesse sind z.B. die folgenden PTHF-Gemische: PTHF 250 ($\overline{MG}$ = ca. 250, m = ca. 3), PTHF 650 ($\overline{MG}$ = ca. 650, m = ca. 9), PTHF 1000 ($\overline{MG}$ = ca. 1000, m = ca. 14), PTHF 2000 ($\overline{MG}$ = ca. 2000, m = ca. 27), PTHF 2900 ($\overline{MG}$ = ca. 2900, m = ca. 40) und PTHF 4500 ($\overline{MG}$ = ca. 4500, m = ca. 62).

Jedes dieser PTHF-Gemische enthält ein breites Spektrum von PTHF-Homologen, deren Anzahl ca. 10 bis 20 im niedrigen Molmassenbereich beträgt und auf über 30 im hohen Molmassenbereich ansteigt.

PTHF wird als $\alpha,\omega$-Diol für die Herstellung von Polymeren verwendet. Hierbei zeichnet es sich wegen seiner wertvollen Eigenschaften als Baustein für elastomere und thermoplastische Polymere aus (P. Dreyfuss "Handbook of Elastomers, New Developments and Technology", 1988, S. 695).

Als $\alpha,\omega$-Diol ist die Reaktionsfähigkeit des PTHF allerdings auf die typischen Reaktionen von primären Alkoholen beschränkt. Es hat daher nicht an Versuchen gefehlt, dem PTHF durch Modifizieren der Endgruppen eine andere Reaktivität zu verleihen, um dadurch seine Verwendungsmöglichkeiten zu erweitern. So liefert z.B. die Umsetzung des PTHF mit Diisocyanaten im Molverhältnis 1:2 PTHF-Diurethane mit freien, endständigen Isocyanatgruppen, und durch Umesterung von (Meth-)Acrylsäureestern mit PTHF erhält man PTHFbis(meth-)acrylate. Bei derartigen Umsetzungen mit Gemischen von PTHF-Homologen erhält man wiederum Gemische von homologen PTHF-Derivaten, die sich strukturell ebenfalls nur durch die unterschiedliche Zahl der wiederkehrenden Oxi-butan-1,4-diyl-Einheiten in der Polyetherkette unterscheiden.

Gegenstand dieser Erfindung sind die neuen PTHF-Derivate der Formeln I und II. Diese neuen Verbindungen sind wertvolle Zwischenprodukte für die Herstellung polymerer Ester, Amide, Urethane, Harnstoffe, Klebstoffe und Bindemittel.

Als Alkylreste kommen für $R^1$ solche mit 1 bis 20 C-Atomen, und für $R^2$, $R^3$, $R^5$ und $R^6$ solche mit 1 bis 10 C-Atomen in Betracht. Die Alkylreste können geradkettig oder verzweigt sein. Beispielsweise seien die folgenden Alkylreste genannt: Methyl, Ethyl, Propyl, iso-Propyl, Butyl, iso-Butyl, tert.-Butyl, Pentyl, Hexyl und Nonyl.

Die bevorzugten Alkylreste $R^1$ haben 1 bis 10 C-Atome und die bevorzugten Alkylreste $R^2$, $R^3$, $R^5$ und $R^6$ haben 1 bis 6, insbesondere 1 bis 4 C-Atome.

PTHF-Derivate der Formeln I und II sind z.B. die folgenden Verbindungen, in denen

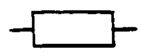

für das Brückenglied $\{(CH_2)_4-O\}_n(CH_2)_4$- steht:

1. 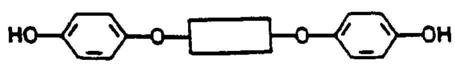

2. 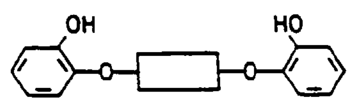

3. 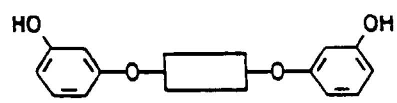

4. 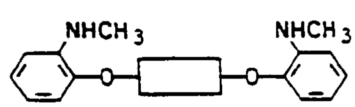

5. 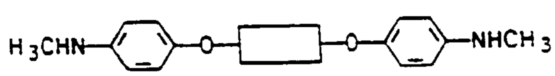

6. 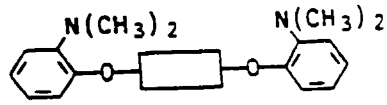

7. 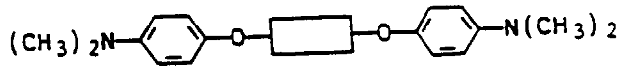

8. 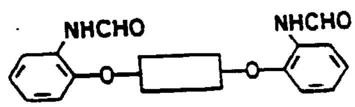

9. 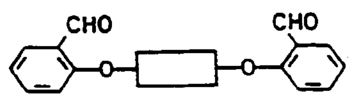

10. 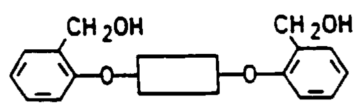

11. 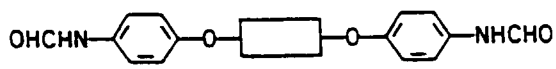

12. 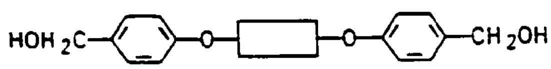

13. 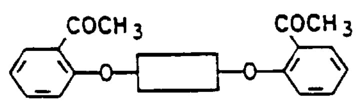

14. 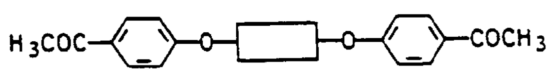

15. 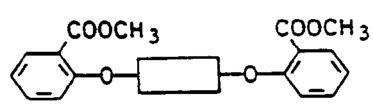

16. 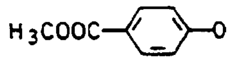

17. 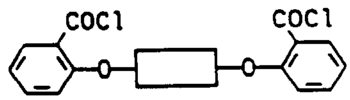

18. 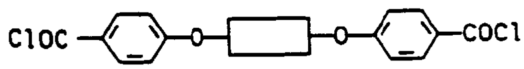

19. 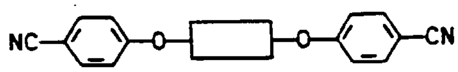

20. 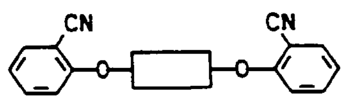

21. 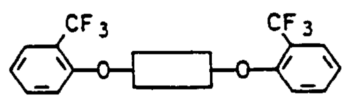

22. 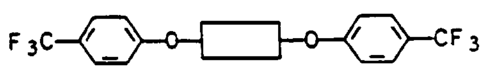

23. 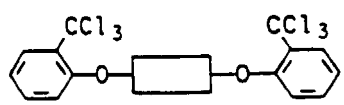

24. 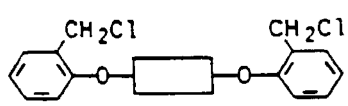

25. 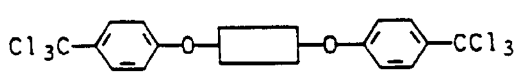

26.

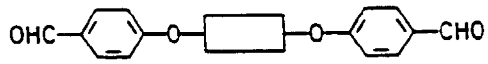

27.

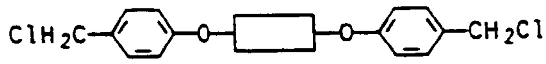

28.

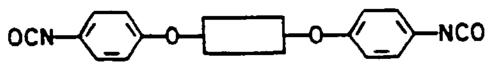

29.

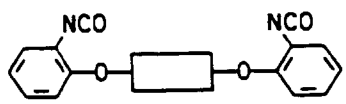

30.

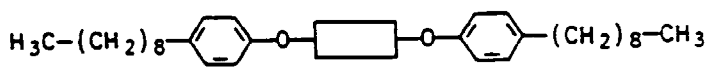

31.

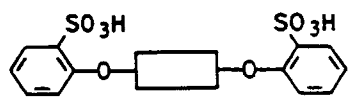

32.

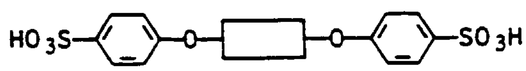

33.

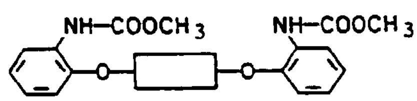

34.

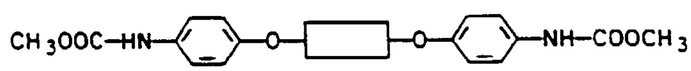

35.

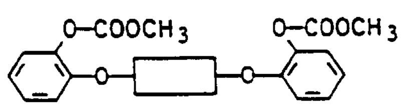

36. 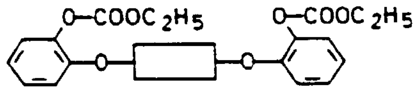

37. 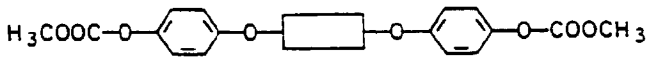

38. 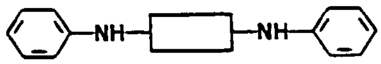

39. 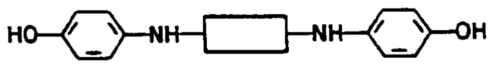

40. 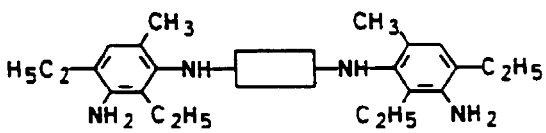

41. 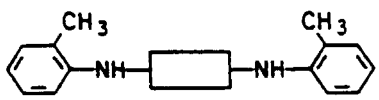

42. 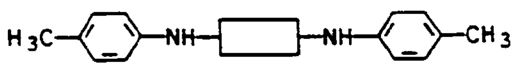

43. 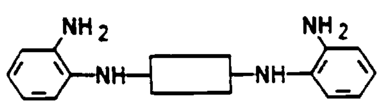

44. 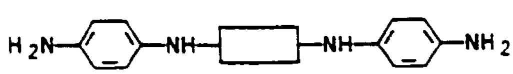

45. 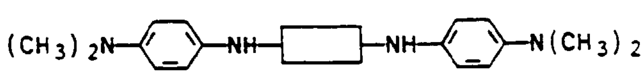

46. 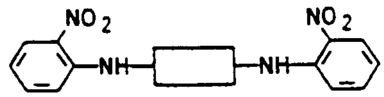

47. 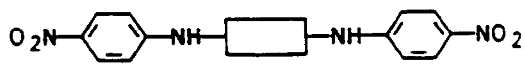

48. 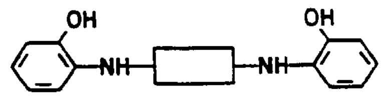

49. 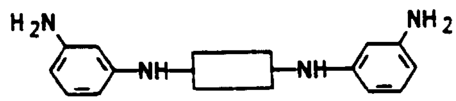

Man stellt die neuen PTHF-Derivate z.B. durch Umsetzung von PTHF oder PTHF-Derivaten der allgemeinen Formel

$$HX\{(CH_2)_4\text{-}O\}_n(CH_2)_4\text{-}XH \qquad \text{III},$$

in der X und n die obengenannte Bedeutung haben, mit Benzolderivaten der allgemeinen Formel

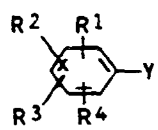 IV,

her, wobei Y für einen elektrofugen Substituenten, wie ein Halogenatom, vorzugsweise ein Chlor- oder Fluoratom steht und $R^1$, $R^2$, $R^3$, $R^4$ die obengenannte Bedeutung haben. Für diese Umsetzung werden vorzugsweise solche Benzolderivate der Formel IV herangezogen, in denen die Reste R für elektronegative Substituenten, wie $O_2N$-, OHC-, NC-, $R^5O$-CO-Reste stehen.

Man kann die neuen PTHF-Derivate z.B. auch dadurch herstellen, daß man PTHF-Derivate der Formel

$$Z\{(CH_2)_4\text{-}O\}_n(CH_2)_4\text{-}Z \qquad \text{V},$$

in der Z einen elektrofugen Rest, wie ein Halogenatom, vorzugsweise Cl oder Br oder einen Sulfonsäurerest, wie einen Tosylrest oder einen Phenylsulfonsäurerest, vorzugsweise einen Mesylrest bedeutet, mit einem Benzolderivat der Formel

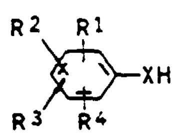 VI,

in der X, $R^1$, $R^2$, $R^3$ und $R^4$ die obengenannte Bedeutung haben, umsetzt.

Benzolderivate der Formel VI sind z.B. Phenolderivate, wie Alkylphenole, z. B. p-Nonylphenol, Hydroximethylphenole, z. B. p-Hydroximethylphenol, 5 Halogenmethylphenole, z. B. o-Trifluormethylphenol oder p-Trichlormethylphenol, Acylphenole, z. B. o-und p-Formylphenol, o- und p-Acetylphenol, Alkoxicarbonylphenole, z. B. o- und p-Methoxicarbonylphenol, Cyanophenole, z. B. o- und p-Cyanophenol, Aminophenole, z. B. p-Aminophenol, N-Acylaminophenole, z. B. p-N-Formylaminophenol, mehrwertige Phenole, z. B. Brenzkatechin, Resorcin und Hydrochinon, Nitrophenole, z. B. o-, m- und p-Nitrophenol, sowie 2,4-Dinitrophenol, Sulfo-substituierte Phenole, z. B. o- und p-Hydroxibenzolsulfonsäure. Weitere Verbindungen der Formel VI sind z. B. Anilin und Anilinderivate, wie Alkylaniline, z. B. o-, m- und p-Toluidin, 2,6-Dimethylanilin und mehrwertige Aminobenzole, z. B. o-, m-und p-Phenylendiamin, 2,4-Diethyl-6-methyl-1,3-phenylendiamin, Hydroxiaminophenole, z. B. p-Hydroxianilin.

Man kann PTHF-Derivate der Formeln I oder II z.B. auch durch Hydrierung solcher PTHF-Derivate der Formel I herstellen, die am Benzolring reduzierbare Substituenten, wie Acyl-, Ester-, Nitril- oder insbesondere Nitrogruppen enthalten, wobei diese Gruppen in Hydroxialkyl-, Hydroximethyl-, Aminomethyl- und Aminogruppen übergehen. Besonders geeignet sind hierfür PTHF-Derivate der Formel II mit Nitrogruppen.

In den folgenden Beispielen wurden alle neuen Polytetrahydrofuranderivate NMR-spektroskopisch unter Verwendung von Tetramethylsilan als innerem Standard charakterisiert; die chemischen Verschiebungen sind in ppm angegeben. Die Abkürzungen bedeuten: s = Singulett, d = Dublett, t = Triplett, m = Multiplett. Die mittleren Molmassen $\overline{MG}$ wurden aus den Intensitätsverhältnissen charakteristischer NMR-Banden abgeleitet oder osmometrisch bestimmt.

Beispiel 1

Herstellung von PTHF mit p-Formylphenoxigruppen (Verbindung Nr.26)

Zum Gemisch aus 158 g ca. 87 %igem Natriumsalz des p-Hydroxibenzaldehyds und 2 1 Dimethylformamid tropft man unter Rühren bei 60-67°C innerhalb von 3 h 156 g PTHF 250-Dimesylat. Man rührt das Reaktionsgemisch noch 8 h bei 60°C, versetzt es dann mit 3 l Wasser und extrahiert es zweimal mit je 11 Methyl-tert.-butylether. Die vereinigten organischen Lösungen werden dreimal mit je 0,5 1 Wasser gewaschen und eingedampft. Der Rückstand wird im Ölpumpenvakuum getrocknet. Man erhält 160 g der Verbindung Nr. 26 mit n = 2 als dickflüssiges Öl.
NMR ($CDCl_3$):
δ = 1,5-2,0 (m); 3,3-3,6 (m); 4,05 (t); 6,95 und 7,8 (d, d); 9,0 (s) $\overline{MG}$ (NMR): 479

Beispiel 2

Herstellung von PTHF mit p-Acetylphenoxigruppen (Verbindung Nr. 14)

In Analogie zu Beispiel 1 setzt man 137 g eines 97 %igen Natriumsalzes des p-Acetylphenols in 2 1 Dimethylformamid bei 65-70°C mit 366 g PTHF 1000-Dimesylat um. Nach der gleichen Aufarbeitung erhält man 370 g der verbindung Nr. 14 mit n = 13 als dickflüssiges Öl.
NMR ($CDCl_3$):
δ = 1,5-2,0 (m); 2,55 (s); 3,3-3,6 (m); 4,0 (t); 7,0 und 8,0 (d, d) $\overline{MG}$ (osmometrisch in Aceton): 1252

Beispiel 3

Herstellung von PTHF mit p-Methoxicarbonylphenoxigruppen (Verbindung Nr. 16)

Man löst 94,4 g p-Hydroxibenzoesäuremethylester in 600 ml Methanol, gibt 111,6 g 30 %ige methanolische Natriummethylatlösung und 564 g einer 48 %igen Lösung des PTHF-1000-Dimesylats in Toluol hinzu und rührt das Reaktionsgemisch 24 h bei ca. 60°C. Anschließend zieht man das Lösungsmittel ab, verteilt den Rückstand zwischen 300 ml Wasser und 800 ml Methyl-tert.-butylether, wäscht die organische Phase mit 500 ml Wasser, destilliert das Lösungsmittel ab und trocknet den Rückstand im Ölpumpenvakuum. Man erhält 279 g der Verbindung Nr.16 mit n = 13.
NMR ($CDCl_3$):
δ = 1,5-1,95 (m); 3,3-3,55 (m); 3,85 (s); 4,0 (t); 6,9 und 8,0 (d, d) $\overline{MG}$ (NMR): 1056

Beispiel 4

Herstellung von PTHF mit p-Cyanophenoxigruppen (Verbindung Nr. 19)

Man legt eine Lösung von 25 g p-Cyanophenol und 10,8 g Natriummethylat in 230 ml Methanol vor und tropft innerhalb von 4,5 h unter Rühren bei 60°C Reaktionstemperatur 262,8 g einer 44 %igen Lösung von PTHF 1000-Dimesylat in Toluol zu. Man rührt noch 6 h bei 60°C weiter, gibt 1 l Wasser zu, trennt die organische Phase ab, wäscht sie zweimal mit 250 ml 10 %iger wäßriger Natriumcarbonatlösung, zieht die Lösungsmittel ab und trocknet den Rückstand im Ölpumpenvakuum. Man erhält 107,2 g der Verbindung Nr. 19 mit n = 13.
NMR ($CDCl_3$):
δ = 1,45-1,95 (m); 3,2-3,5 (m); 4,05 (t); 6,9 und 7,6 (d, d) $\overline{MG}$ (NMR): 1450

Beispiel 5

Herstellung von PTHF mit p-Hydroxiphenoxigruppen (Verbindung Nr. 1)

Man setzt unter Stickstoff das Salz aus 8,3 g ca. 80 %igem Natriumhydrid und 27,5 g Hydrochinon in 400 ml N-Methylpyrrolidon mit der Lösung von 28,9 g PTHF 1000-Dimesylat um. Nach dem Abkühlen versetzt man das Reaktionsgemisch mit 12 g Eisessig, zieht das Lösungsmittel bei 5 mbar und 100°C Badtemperatur ab, verteilt den Rückstand zwischen 500 ml 10 %iger wäßriger Natriumcarbonat-Lösung und 400 ml Methyl-tert.-butylether, extrahiert die wäßrige Phase zweimal mit je 100 ml Methyl-tert.-butylether, wäscht die vereinigten organischen Lösungen mit 150 ml 10 %iger wäßriger Natriumhydrogencarbonat-Lösung, zieht das Lösungsmittel ab und entfernt überschüssiges Hydrochinon durch Absublimieren bei 0,2 mbar und 140-155°C Badtemperatur. Man erhält 22,3 g der Verbindung Nr. 1 (n = 13) als dunkles, zähes Öl.
NMR: ($D_6$-DMSO):
δ = 1,4-1,8 (m); 3,25 (s); 3,35 (m); 3,85 (t); 6,65 und 6,75 (d, d) $\overline{MG}$ (osmometrisch in Aceton): 1306

Beispiel 6

Herstellung von PTHF mit p-Sulfophenoxigruppen (Verbindung Nr. 32)

Unter Stickstoff suspendiert man 143,8 g eines ca. 90 %igen Dinatriumsalzes der p-Hydroxiphenylsulfonsäure in 1 l N-Methylpyrrolidon, tropft unter Rühren bei 100°C Reaktionstemperatur 208,1 g PTHF 1000-Dimesylat zu, rührt das Reaktionsgemisch noch 4 h bei 100°C und eine weitere Stunde bei 120°C. Nach dem Abziehen des Lösungsmittels bei 5 mbar und 100°C Badtemperatur verteilt man den Rückstand zwischen 500 ml 2n Salzsäure und 500 ml Methylenchlorid, schüttelt die organische Phase einmal mit 300 ml 2n Salzsäure, zieht das Lösungsmittel ab und trocknet den Rückstand im Ölpumpenvakuum. Man erhält 179 g der Verbindung Nr. 32 mit n = 13.
NMR ($D_6$-DMSO):
δ = 1,4-1,8 (m); 3,2-3,5 (m); 4,0 (t); 6,85 und 7,5 (d, d); 8,1 (m)
$\overline{MG}$ (aus Säurezahl berechnet): 1403

Beispiel 7

Herstellung von PTHF mit Phenylaminogruppen (Verbindung Nr. 38)

Man legt 1058 g Anilin vor und tropft unter Rühren 231 g PTHF 250-Dimesylat innerhalb von 1 h bei 70°C zu. Man rührt weitere 4 h und destilliert das überschüssige Anilin bei 55°C/0,5 mbar ab. Der Rückstand wird zwischen 700 ml 2n. Natronlauge und 500 ml Methyl-tert.-butylether verteilt und die organische Phase getrocknet und eingeengt. Man erhält 189 g der Verbindung der Formel 38 (n = 2) als gelbes Öl.
NMR ($CDCl_3$):
δ = 1,4-1,8 (m); 3,15 (t); 3,3-3,5 (m); 3,65 (breites m); 6,5-6,8 (m); 7,1-7,3 (m)
$\overline{MG}$ (NMR): 420

Beispiel 8

Herstellung von PTHF mit p-Aminophenylaminogruppen (Verbindung Nr. 44)

Unter Stickstoff löst man 10,8 g p-Phenylendiamin in 200 ml Methanol bei 30-40°C, tropft unter Rühren 11,6 g PTHF 1000-Dimesylat innerhalb von ca. 30 min zu und rührt das Reaktionsgemisch weitere 3 h bei Raumtemperatur. Nach Abziehen des Lösungsmittels entfernt man das übeschüssige p-Phenylendiamin bei 180-220°C und 3 mbar in einer Kurzweg-Destillationsapparatur. Man suspendiert den Rückstand in 80 ml 2n Natronlauge und extrahiert dreimal mit je 100 ml Methyl-tert.-butylether. Nach Waschen der vereinigten organischen Lösungen mit 50 ml Wasser zieht man das Lösungsmittel ab und trocknet den Rückstand im Ölpumpenvakuum. Man erhält 10,3 g der Verbindung Nr. 44 mit n = 13.
NMR ($CDCl_3$):
δ = 1,4-1,8 (m); 3,1 (t); 3,2,-3,4 (m); 6,55 und 6,6 (d, d)
$\overline{MG}$ (osmometrisch in Chloroform): 1200

Beispiel 9

Herstellung von PTHF mit 3-Amino-2,4-diethyl-6-methylphenylaminogruppen (Verbindung Nr. 40)

Man legt 963 g 3,5-Diethyl-2,4-diaminotoluol vor und tropft unter Rühren 122 g PTHF 250-Dimesylat innerhalb von 1 h bei 70°C zu. Man rührt weitere 4 h und destilliert das überschüssige Amin bei 133°C/2 mbar ab. Der Rückstand wird zwischen 400 ml Toluol und 500 ml 2n Natronlauge verteilt. Die Toluolphase wird noch lx mit 400 ml gesättigter Natriumchlorid-Lösung ausgeschüttelt, getrocknet und eingeengt. Man erhält 134,6 g der Verbindung Nr. 40 mit n = 2 als gelbes Öl.
NMR ($CDCl_3$):
$\delta$ = 1,1-1,3 (m); 1,5-1,7 (m); 2,0-2,3 (m); 2,4-2,8 (m); 2,9 (t); 3,2-3,6 (m); 6,75 (s)
$\overline{MG}$ (NMR): 570

Beispiel 10

Herstellung von PTHF mit p-Hydroxiphenylaminogruppen (Verbindung Nr. 39)

Man legt 21,8 g p-Aminophenol in 200 ml N-Methylpyrrolidon vor, tropft unter Rühren in 1 h bei 50°C 23,1 g PTHF 1000-Dimesylat zu und rührt das Reaktionsgemisch noch 3 h. Nach Abdestillieren des Lösungsmittels bei 5 mbar und 100°C Badtemperatur entfernt man den größten Teil des p-Aminophenol-überschusses durch Absublimieren bei 2 mbar und 160°C Badtemperatur, verteilt den Rückstand zwischen 150 ml 10 %iger wäßriger Natriumhydrogencarbonatlösung und 150 ml Methylenchlorid, wäscht die organische Phase mit 100 ml 10 %iger wäßriger Natriumhydrogencarbonatlösung, zieht das Lösungsmittel ab und trocknet den Rückstand im Ölpumpenvakuum.

Man erhält 15,5 g der Verbindung Nr.39 mit n = 13 als dunkles, zähes Öl.
NMR ($CDCl_3$) :
$\delta$ = 1,4 - 1,7 (m); 3,1 (t); 3,2 - 3,5 (m); 6,4 4 (breites m); 6,55 und 6,7 (d, d)
$\overline{MG}$ (osmometrisch in Chloroform) : 1300

Herstellung von PTHF mit p-Nitrophenoxigruppen

Unter trockenem Stickstoff legt man 3,5 g 80 %iges Natriumhydrid in 70 ml N-Methylpyrrolidon vor und tropft in ca. 45 min unter Rühren bei 25-40°C die Lösung von 15,3 g p-Nitrophenol in 80 ml N-Methylpyrrolidon zu. Man erhitzt die Lösung auf 140°C, tropft in 1 h die Lösung von 57,8 g PTHF 1000-Dimesylat in 50 ml N-Methylpyrrolidon zu, rührt das Reaktionsgemisch weitere 4 h bei 140°C und zieht das Lösungsmittel bei 1 mbar und 100°C Badtemperatur ab. Man verteilt den Rückstand zwischen 400 ml einer 10 %igen wäßrigen Natriumcarbonat-Lösung und 300 ml Methyl-tert.-butylether, wäscht die organische Phase mit 200 ml 10 %iger wäßriger Natriumcarbonat-Lösung, zieht das Lösungsmittel ab und trocknet den Rückstand im Ölpumpenvakuum. Man erhält 51,3 g der Verbindung

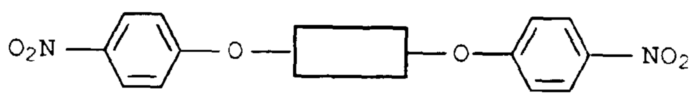

mit n = 13 als gelbes, zähes Öl.
NMR ($CDCl_3$) :
$\delta$ = 1,4 - 2,0 (m); 3,2 - 3,5 (m); 4,1 (t); 6,95 und 8,2 (d, d)
$\overline{MG}$ (osmometrisch in Aceton): 1160

Herstellung von PTHF mit p-Aminophenoxigruppen

In einem 300-ml-Autoklaven erhitzt man das Gemisch aus 62,1 g der Verbindung

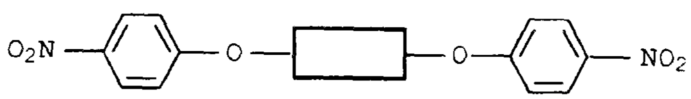

(MG = 1200), 150 ml THF und 5 g Raney-Nickel unter Durchmischen unter 50 bar Wasserstoff-Druck 2 h auf 75°C und noch eine weitere h auf 100°C. Anschließend läßt man abkühlen, entspannt, filtriert und zieht die Niedersieder im Vakuum ab. Man erhält 56,0 g der Verbindung

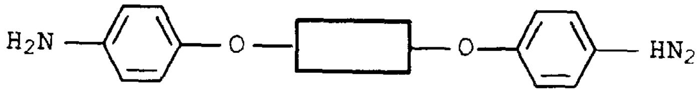

mit n = 13 als viskoses, braunes Öl.
NMR ($CDCl_3$): δ = 1,4-1,8 (m); 3,2-3,4 (m); 3,9 (t); 6,6 und 6,75 (d, d)
$\overline{MG}$ (osmometrisch in Chloroform) : 1200

Beispiel 11

Herstellung von PTHF mit p-Formylaminophenoxigruppen (Verbindung Nr. 11)

Das Gemisch aus 84, g der Verbindung

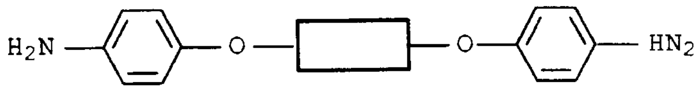

13,5 g Formamid und 200 ml NMP wird so lange auf 120°C. erhitzt, bis kein Ammoniak mehr entweicht (ca. 5 h). Anschließend destilliert man überschüssiges Formamid und Lösungsmittel im Vakuum ab. Man erhält 86 g der Verbindung Nr. 11 mit n = 9.
NMR ($DCl_3$):
δ = 1,4 - 1,8 (m); 3,2 - 3,6 (m); 4,0 (t); 6,6 und 7,6 (d, d); 8,4 (s); 9,0 (breites s)
$\overline{MG}$ (osmometrisch in Chloroform): 902

Beispiel 12

Herstellung von PTHF mit p-Isocyanatophenoxigruppen (Verbindung Nr. 28)

Man legt die Lösung von 84 g der Verbindung

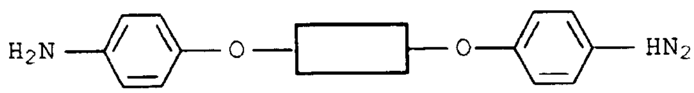

(650) in 200 ml o-Dichlorbenzol vor, leitet bei 0°C Chlorwasserstoff ein und setzt die erhaltene Suspension des Dihydrochlorids bei 120 - 130°C mit ca. 20 g Phosgen um. Nach 5 h Reaktionsdauer wird das fast klare Reaktionsgemisch filtriert, das Lösungsmittel abdestilliert und der Rückstand im Ölpumpen-Vakuum getrocknet. Man erhält 85 g der Verbindung Nr. 28 mit n = 9.
NMR ($CDCl_3$):
δ = 1,4 - 1,8 (m); 3,2 - 3,6 (m); 3,9 (t); 6,8 und 7,0 (d, d)
$\overline{MG}$ (osmometrisch in Chloroform) : 895

Beispiel 13

Herstellung von PTHF mit p-Nonylphenoxigruppen (Verbindung Nr. 30)

In Analogie zu Beispiel 1 setzt man 26,4 g p-Nonylphenol und 6,5 g Natriummethylat in 20 ml Methanol mit 507 g einer 48 %igen PTHF 4500-Dimesylat-Lösung in Toluol um. Nach der gleichen Aufarbeitung erhält man 246 g der Verbindung Nr. 30 mit n = 61 als gelbliches, wachsartig erstarrendes Produkt.
NMR ($CDCl_3$):
δ = 0,9 (m); 1,2 - 2,1 (m); 2,5 (t); 3,3 - 3,6 (m); 3,9 (t); 6,7 und 7,0 (d,d)
$\overline{MG}$ (NMR): 4900

**Patentansprüche**

1. Polytetrahydrofuranderivate der allgemeinen Formel

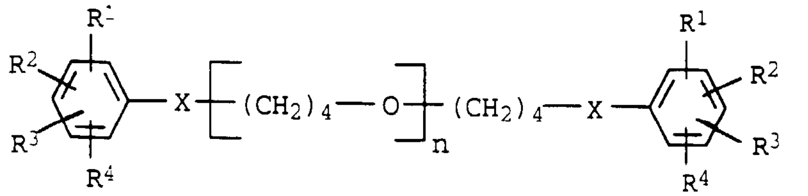

I,

in der

n eine Zahl von 2 bis 70, X das Brückenglied -O-,

$R^1$ einen OHC-NH-, HO-, OHC-, NC-,-$HOCH_2$-, $ClH_2C$-, $FH_2C$-, $Cl_3C$-, $F_3C$-, $HO_3S$-, ClOC-, OCN-, NCO-Rest oder einen der Reste $R^5$O-CO-, $R^5$CO-, $R^5$O-, $R^5$CO-NH-, $R^5$OOC-NH-, $R^5$OOC-O-, in denen $R^5$ für Alkylreste mit 1 bis 10 C-Atomen steht,

$R^2$ und $R^3$ jeweils ein Wasserstoffatom oder einen Alkylrest mit 1 bis 10 C-Atomen und

$R^4$ ein Wasserstoffatom, einen Alkylrest mit 1 bis 4 C-Atomen oder einen HO-Rest bedeuten.

**2.** Polytetrahydrofuranderivate der allgemeinen Formel

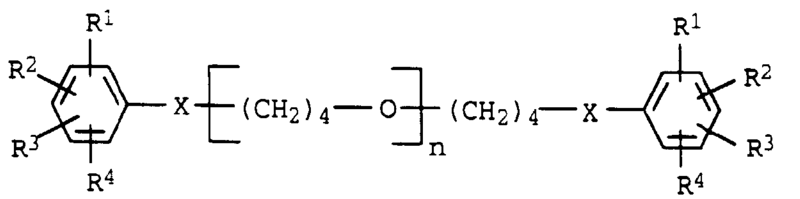

II,

in der

n eine Zahl von 2 bis 70, x das Brückenglied -NH-,

$R^1$ ein Wasserstoffatom, einen Alkylrest mit 1 bis 20 C-Atomen, einen $H_2N$-, $O_2N$-, OHC-NH-, HO-, OHC-, NC-, $HOCH_2$-, $H_2NCH_2$-, $ClH_2C$-, $FH_2C$-, $Cl_3C$-, $F_3C$-, $HO_3S$-, ClOC-, OCN-, NCO-Rest oder einen der Reste $R^5$NH-, $R^5R^6$N-, $R^5$O-CO-, $R^5$CO-, $R^5$O-, $R^5$CO-NH-, $R^5$OOC-NH-, $R^5$OOC-O-, in denen $R^5$ und $R^6$ für Alkylreste mit 1 bis 10 C-Atomen stehen,

$R^2$ und $R^3$ jeweils ein Wasserstoffatom, einen Alkylrest mit 1 bis 10 C-Atomen, einen $H_2N$-, $O_2N$-, OHC-NH-, HO-, OHC-, NC-, $HOCH_2$-Rest oder einen der Reste $R^5$-NH-, $R^5R^6$-N-, in denen $R^5$ und $R^6$ die obengenannte Beschreibung haben, und

$R^4$ ein Wasserstoffatom, einen Alkylrest mit 1 bis 4 C-Atomen oder einen $H_2N$-, $O_2N$- oder HO-Rest bedeuten.

## Claims

**1.** A polytetrahydrofuran derivative of the formula

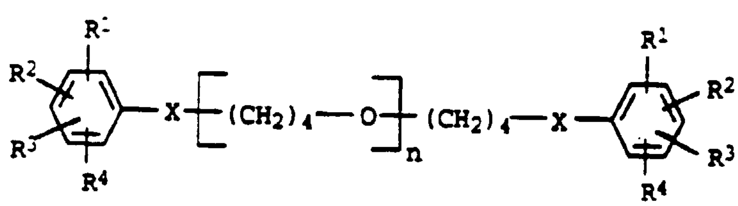

I,

where

n is from 2 to 70, X is the bridge member -O-,

$R^1$ is an OHC-NH-, HO-, OHC-, NC-, $HOCH_2$-, $ClH_2C$-, $FH_2C$-, $Cl_3C$-, $F_3C$-, $HO_3S$-, ClOC-, OCN- or NCO- radical or one of the radicals $R^5C$-CO-, $R^5CO$-, $R^5O$-, $R^5CO$-NH-, $R^5OOC$-NH- and $R^5OOC$-O-, in which $R^5$ is alkyl of 1 to 10 carbon atoms,

$R^2$ and $R^3$ are each hydrogen or alkyl of 1 to 10 carbon atoms and

$R^4$ is hydrogen, alkyl of 1 to 4 carbon atoms or HO.

**2.** A polytetrahydrofuran derivative of the formula

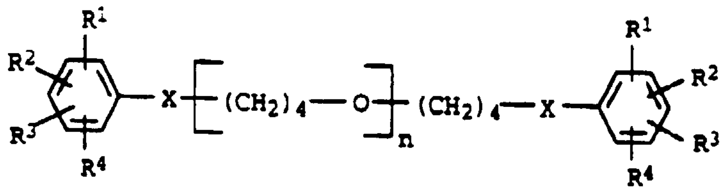

II,

where

n is from 2 to 70, X is the bridge member -NH-,

$R^1$ is hydrogen, alkyl of 1 to 20 carbon atoms, an $H_2N$-, $O_2N$-, OHC-NH-, HO-, OHC-, NC-, $HOCH_2$-, $H_2NCH_2$-, $ClH_2C$-, $FH_2C$-, $Cl_3C$-, $F_3C$-, $HO_3S$-, ClOC-, OCN- or NCO- radical or one of the radicals $R^5NH$-, $R^5R^6N$-, $R^5C$-CO-, $R^5CO$-, $R^5C$-, $R^5CO$-NH-, $R^5OOC$-NH- and $R^5OOC$-O-, in which $R^5$ and $R^6$ are each alkyl of 1 to 10 carbon atoms,

$R^2$ and $R^3$ are each hydrogen, alkyl of 1 to 10 carbon atoms, an $H_2N$-, $O_2N$-, OHC-NH-, HO-, OHC-, NC- or $HOCH_2$- radical or one of the radicals $R^5$-NH- and $R^5R^6$-N-, in which $R^5$ and $R^6$ have the abovementioned description, and

$R^4$ is hydrogen, alkyl of 1 to 4 carbon atoms or an $H_2N$-, $O_2N$- or HO- radical.

## Revendications

**1.** Dérivés de polytétrahydrofuranne de la formule générale

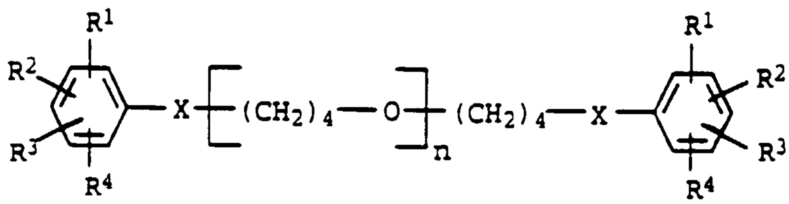

I,

dans laquelle

n représente un nombre dont la valeur varie de 2 à 70, X représente l'élément de pont -O-,

$R^1$ représente un radical OHC-NH-, HO-, OHC-, NC-, -$HOCH_2$-, $ClH_2C$-, $FH_2C$-, $Cl_3C$-, $F_3C$-, $HO_3S$-, ClOC-, OCN-, NCO- ou l'un des groupes $R^5O$-CO-, $R^5CO$-, $R^5O$-, $R^5CO$-NH-, $R^5OOC$-NH-, $R^5OOC$-O-, dans lesquels $R^5$ représente des radicaux alkyle comportant de 1 à 10 atomes de carbone,

$R^2$ et $R^3$ représentent chacun un atome d'hydrogène ou un radical alkyle comportant de 1 à 10 atomes de carbone et

$R^4$ représente un atome d'hydrogène, un radical alkyle comportant de 1 à 4 atomes de carbone, ou un groupe HO-.

**2.** Dérivés de polytétrahydrofuranne de la formule générale

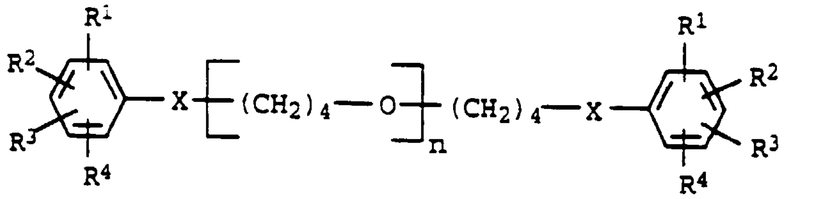 II,

dans laquelle

n représente un nombre dont la valeur varie de 2 à 70, X représente l'élément de pont -NH-,

$R^1$ représente un atome d'hydrogène, un radical alkyle comportant de 1 à 20 atomes de carbone, un radical $H_2N$-, $O_2N$-, OHC-NH-, HO-, OHC-, NC-, $HOCH_2$-, $H_2NCH_2$-, $ClH_2C$-, $FH_2C$-, $Cl_3C$-, $F_3C$-, $HO_3S$-, ClOC-, OCN-, NCO- ou l'un des groupes $R^5$NH-, $R^5R^6$N-, $R^5$O-CO-, $R^5$CO-, $R^5$O-, $R^5$CO-NH-, $R^5$OOC-NH-, $R^5$OOC-O-, dans lesquels $R^5$ et $R^6$ représentent des radicaux alkyle comportant de 1 à 10 atomes de carbone,

$R^2$ et $R^3$ représentent chacun un atome d'hydrogène, un radical alkyle comportant de 1 à 10 atomes, de carbone, un radical $H_2N$-, $O_2N$-, OHC-NH-, HO-, OHC-, NC-, $HOCH_2$- ou l'un des groupes $R^5$-NH-, $R^5R^6$-N-, dans lesquels $R^5$ et $R^6$ possèdent les significations qui leur ont été précédemment attribuées et

$R^4$ représente un atome d'hydrogène, un radical alkyle comportant de 1 à 4 atomes de carbone, ou un groupe $H_2N$-, $O_2N$- ou HO-.